(19) Europäisches Patentamt
European Patent Office
Office européen des brevets

(11) **EP 1 773 135 B1**

(12) **FASCICULE DE BREVET EUROPEEN**

(45) Date de publication et mention
de la délivrance du brevet:
**24.07.2019 Bulletin 2019/30**

(51) Int Cl.:
*A23L 29/25* (2016.01)    *A23L 27/12* (2016.01)
*A23L 33/22* (2016.01)    *A61K 9/14* (2006.01)
*A23L 29/30* (2016.01)    *A23L 27/00* (2016.01)
*A23P 10/25* (2016.01)    *A23P 10/30* (2016.01)

(21) Numéro de dépôt: **05797527.8**

(22) Date de dépôt: **01.08.2005**

(86) Numéro de dépôt international:
**PCT/FR2005/050636**

(87) Numéro de publication internationale:
**WO 2006/021720 (02.03.2006 Gazette 2006/09)**

(54) **PARTICULE(S) SOLIDE(S) ENTIEREMENT SOLUBLE(S) A BASE DE FIBRE(S) ALIMENTAIRE(S)**

KOMPLETT LÖSLICHE FESTE PARTIKEL AUF BASIS VON BALLASTSTOFFEN

COMPLETELY-SOLUBLE SOLID PARTICLE(S) BASED ON DIETARY FIBRES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.08.2004 FR 0451807**

(43) Date de publication de la demande:
**18.04.2007 Bulletin 2007/16**

(73) Titulaire: **SINE SILEO**
**26400 Grane (FR)**

(72) Inventeur: **CINGOTTI, Dominique**
**F-69100 VILLEURBANNE (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A- 1 123 660     WO-A-00/25606**
**WO-A-01/17372     WO-A-01/43568**
**WO-A-99/06028     WO-A-02/065858**
**WO-A-03/092412     FR-A- 2 294 653**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne une particule solide entièrement soluble à base de fibre(s) alimentaire(s) soluble(s) et d'au moins une substance active à visée notamment diététique, cosmétique ou pharmaceutique.

De manière générale, les particules de l'invention peuvent comprendre tout type de substance active, et préférentiellement des substances d'origine végétale, en particulier sous forme d'extrait de plante ou partie de plante. Dans la suite de la description, l'invention est plus particulièrement décrite en relation avec l'utilisation en tant que substance active, d'arômes. On entend par "arôme" tout produit ou substance destiné à être ajouté à des denrées alimentaires pour leur donner une odeur, un goût ou les deux. On distingue parmi les arômes les substances aromatisantes naturelles, les substances aromatisantes identiques aux substances aromatisantes naturelles, les substances aromatisantes artificielles, les préparations aromatisantes, les arômes de transformation et les arômes de fumées.

Une substance aromatisante naturelle est une substance chimiquement définie qui est obtenue soit par des procédés physiques appropriés, y compris la distillation et l'extraction au solvant, soit par des procédés enzymatiques ou microbiologiques, à partir d'une matière d'origine végétale ou animale prise en l'état ou après sa transformation pour la consommation humaine par des procédés traditionnels de préparation des denrées alimentaires, y compris le séchage, la torréfaction et la fermentation. Dans cette catégorie, on trouve notamment les huiles essentielles et les arômes purs.

Une substance aromatisante identique à une substance aromatisante naturelle est une substance chimique définie qui est chimiquement identique à une substance aromatisante naturelle après avoir été obtenue par synthèse chimique ou isolée par des procédés chimiques.

Une substance aromatisante artificielle est une substance chimique définie qui, ayant été obtenue par synthèse chimique, n'est pas chimiquement identique à une substance aromatisante naturelle.

Une préparation aromatisante est un produit, autre qu'une substance aromatisante naturelle, concentré ou non, qui est obtenu par des procédés physiques appropriés, y compris la distillation et l'extraction au solvant, soit par des procédés enzymatiques ou microbiologiques, à partir de matières d'origine végétale ou animale prises en l'état ou après leur transformation pour la consommation humaine par des procédés traditionnels de préparation des denrées alimentaires, y compris le séchage, la torréfaction et la fermentation.

Un arôme de transformation est un produit obtenu par chauffage à une température n'excédant pas 180°C pendant une période n'excédant pas quinze minutes d'un mélange d'ingrédients qui ont ou non des propriétés aromatisantes, à la condition que figurent parmi les composants du mélange au moins un ingrédient contenant de l'azote et au moins un ingrédient servant de sucre réducteur.

Un arôme de fumée est un extrait de fumée qui est utilisée dans les procédés traditionnels de fumaison des denrées alimentaires.

L'ensemble de ces produits présente un profil analytique spécifique susceptible d'être caractérisé notamment par chromatographie phase gazeuse qu'il est nécessaire de restituer autant que faire se peut, dans la particule de l'invention.

Dans la description et dans les revendications, par "Fibres alimentaires solubles", on désigne tout composé de cellules végétales entièrement soluble dans l'eau, résistant aux différentes hydrolyses enzymatiques intervenant lors du processus physiologique de la digestion. Plus précisément, les enzymes de l'organisme abondamment présentes dans l'intestin grêle, du type sucrase-maltase, n'ont aucune action d'hydrolyse sur les liaisons des unités formant les fibres, ne provoquant ainsi aucune augmentation de la glycémie, et du taux d'insuline dans le sang. Ces fibres se composent de cellulose, d'hémicellulose, d'oligosaccharides, pectine, gommes, cires, ces différents composés sont ceux pris en compte dans les analyses de fibres alimentaires. Les fibres solubles sont à distinguer des sucres ou dérivés de sucres, tels que par exemple sucrose, glucose, lactose, maltodextrine..., qui sont des sucres directement assimilables rapides ou lents.

Selon l'invention, les fibres alimentaires sont constituée(s) d'un polymère entièrement soluble dans l'eau choisi exclusivement dans le groupe comprenant l'inuline, oligo-fructoses (encore désignés fructo-oligosaccharides (FOS)), gomme d'acacia, utilisées seules ou en mélange.

De manière connue, l'inuline est un mélange d'oligomères et de polymères de fructose, obtenu par extraction à partir notamment de racines de chicorée. La structure de l'inuline peut être représentée par la formule GFn, dans laquelle :

G = unité glycosyl,
F = unité fructosyl,
n = nombre d'unités fructosyl liées (n>2),
DP = degré de polymérisation variant de 2 à 60,

liaison du type $\beta$ (1-2).

En pratique, l'inuline est constituée d'une soixantaine d'unités fructose.

Les fructo-oligosaccharides correspondent quant à eux à un mélange d'oligomères et de polymères de fructose obtenu par hydrolyse de l'inuline.

La structure des FOS, peut être représentée par la formule GFn ou Fm, dans laquelle :

G = unité glycosyl,

F = unité fructosyl,

n et m = nombre d'unités fructosyl liées (n>2)

DP : degré de polymérisation variant de 2 à 20,

liaison du type β (1-2).

En pratique, les FOS sont constituées de 10 unités fructose.

Le document WO 99/06028 décrit un procédé de fabrication de granules à partir de fibres alimentaires du type de celles de la présente invention. Plus précisément, les fibres alimentaires se présentent sous forme atomisées et sont mises en présence d'un extrait de principe actif, par exemple des huiles essentielles, en milieu solvant et en l'absence de liant, avant une étape ultime de séchage en étuve, permettant d'éliminer le solvant. Selon ce procédé, on met en oeuvre un support atomisé poreux de surface spécifique élevée, de manière à pouvoir imprégner, à la surface et dans les pores de la structure, le maximum d'extrait. L'absence de liant conduit à récupérer, en fin de procédé, autant de particules atomisées qu'il y en avait au départ. En outre, il est précisé que le solvant doit être choisi de sorte à ce qu'il ne soit pas capable de solubiliser les fibres alimentaires. Il s'ensuit donc que la structure des fibres alimentaires n'est pas modifiée en cours de procédé. Les granulés obtenus, de taille de l'ordre de 1 mm, présentent des caractéristiques mécaniques, en particulier de dureté, incompatibles avec une opération ultérieure de calibrage. En effet, les granules ne peuvent être réduits en taille sans conduire à une perte importante de matière, du fait de leur friabilité élevée.

Le document WO 01/17372 décrit un procédé de fabrication de granules à base d'arômes et de maltodextrine. Cette technique consiste à solubiliser l'arôme dans l'eau, puis à mouiller la maltodextrine avec la solution obtenue pour former une pâte. En l'absence d'eau, l'état pâteux est impossible à obtenir. La pâte est ensuite chauffée à une température de 90 à 130°C permettant d'évaporer l'eau et donc de durcir. La pâte est enfin extrudée puis calibrée. L'inconvénient de ce procédé est de nécessiter des températures et des pressions (entre 1 et 50 bars) élevées, qui, ajoutées à la présence nécessaire d'eau, modifient complètement le profil chromatographique des arômes. Par ailleurs, du fait de la présence d'eau, seuls les principes actifs hydrosolubles donc hydrophiles sont mis en oeuvre.

Le document FR-A-2 294 653 décrit des grains poreux obtenus par mise sous vide d'un mélange comprenant une maltodextrine assimilable.

Les documents WO 03/092912, EP-A-112 660, WO 00/25606, WO 01/17372 et WO 02/65858 décrivent des particules solides, comprenant des maltodextrines assimilables. En outre, rien n'est indiqué concernant le maintien du profil aromatique de l'arôme de base après extrusion.

Le document WO 01/43568 décrit des granules obtenus par extrusion d'un mélange d'inuline et de sucre, en particulier l'acesulfame K. Il n'est pas fait référence à la possible association de l'inuline avec un arôme et donc au problème du profil aromatique de l'arôme obtenu après extrusion.

Le problème que se propose de résoudre l'invention est donc de développer un procédé de fabrication de granules entièrement solubles, à base notamment d'arômes, dans lequel le profil aromatique desdits arômes ne soit pas modifié par rapport au profil d'origine. Dans le même temps, l'objectif est de disposer de granules qui soient ensuite aptes à être calibrées et conditionnées sans perte de matière.

Pour résoudre ce problème, le Demandeur a mis au point un nouveau procédé consistant pour l'essentiel, à extruder dans une filière, sans apport d'eau, un mélange comprenant des fibres alimentaires solubles et au moins une substance active. Le Demandeur a en effet constaté que les fibres alimentaires choisies dans le groupe précité, solides à température ambiante, se transformaient pour devenir semi solides sous l'effet de la chaleur, et ce, en l'absence de solvant et de manière générale, de tout additif. En outre, il a été observé que ce changement d'état se produisait à partir de température de l'ordre de 30°C ou plus, permettant de préparer des particules à base de principes actifs thermosensibles. Enfin, l'état solide recouvré après refroidissement présente une dureté bien supérieure et une friabilité moindre par rapport aux valeurs correspondantes des fibres alimentaires à l'état naturel.

En d'autres termes, les fibres alimentaires constituent un support idéal pour la fabrication de particules entièrement solubles destinées à être ingérées permettant, grâce au changement d'état provoqué par la seule élévation de température, d'une part, de s'affranchir de la nécessaire présence d'eau mentionnée dans le document WO 01/17372 et d'autre part, d'inclure à l'intérieur d'une matrice et non d'imprégner sur des particules individualisées comme c'est le cas dans le document WO 99/06028, des principes actifs thermosensibles. L'avantage de ce procédé est donc de restituer toutes les caractéristiques de l'actif de départ et notamment son profil analytique. En outre, la forme durcie obtenue après refroidissement présente une dureté élevée permettant de calibrer les particules dans une large gamme et à la demande, et ce sans problème de friabilité.

L'invention concerne donc une particule solide entièrement soluble dans l'eau, a base d'au moins un arôme et d'un support comprenant des fibres alimentaires solubles dans l'eau, caractérisée en ce qu'elle présente une dureté d'au moins 0,2 GPa en ce que le support est exclusivement constitue de fibres alimentaires solubles résistantes aux différentes hydrolyses enzymatiques intervenant lors du processus physiologique de la digestion choisies dans le groupe comprenant l'inuline, oligo-fructoses, gomme d'acacia seules ou en mélange.

La technique de nano-indentation consiste à imprimer un indenteur en diamant de très petite taille à la surface d'un matériau solide et à enregistrer la courbe charge d'indentation/profondeur de pénétration au cours d'un essai de charge/décharge. De cette courbe, on déduit ensuite la dureté du matériau. Le protocole précis de mesure de la dureté sera décrit plus en avant.

Bien entendu la dureté de la particule sera fonction de la nature de la substance active incorporée. Si la substance active est mélangée aux fibres alimentaires sous forme liquide, alors la particule aura, dans la fourchette susmentionnée, une dureté plus faible que si la substance active est incorporée sous forme solide. La dureté sera en outre influencée par la teneur de la substance active au sein de la particule. En pratique, la substance active représente entre 0,1 et 10 % en poids de la particule.

Selon une autre caractéristique de l'invention, la particule a une taille comprise entre 0,1 et 3 mm, avantageusement comprise entre 0,3 et 2 mm. Bien entendu, lorsqu'il s'agit de population de particules, les tailles susmentionnées correspondent à des tailles moyennes.

Dans un mode de réalisation avantageux, la particule contient, outre les fibres alimentaires, entre 2 et 5% en poids d'huile essentielle, et présente une dureté comprise entre 0,2 et 0,3 GPa.

Les particules obtenues peuvent être utilisées dans diverses formes galéniques, telles que notamment sachet, comprimé, gélule, poudre, inclusion dans des formes pâteuses...

Une telle particule est susceptible d'être obtenue par un procédé de fabrication de particules solides entièrement solubles dans l'eau a base d'au moins un arôme et d'un support comprenant des fibres alimentaires solubles dans l'eau caractérisée en ce qu'elle présente une dureté d'au moins 0,2 GPa, avantageusement comprise entre 0,3 et 0,4 GPa, en ce que le support est exclusivement constitue de fibres alimentaires solubles résistantes aux différentes hydrolyses enzymatiques intervenant lors du processus physiologique de la digestion choisies dans le groupe comprenant l'inuline, oligo-fructoses, gomme d'acacia seules ou en mélange, selon lequel, en l' absence de solvant hydrophile : on mélange les fibres alimentaires et la substance active jusqu'a obtenir une masse semi-solide, on extrude alors le mélange obtenu au travers d'une filière, enfin, on refroidit puis on calibre a la taille souhaitée les filaments formes pour obtenir des particules.

Selon une caractéristique essentielle, le procédé est conduit en l'absence de solvant hydrophile pour éviter ainsi la solubilisation des fibres alimentaires. Par solvant hydrophile, on désigne donc tout solvant susceptible de dissoudre les fibres alimentaires et notamment l'eau.

Selon une caractéristique avantageuse, les fibres alimentaires sont utilisées sous forme pulvérulente. La forme pulvérulente peut correspondre à une forme atomisée ou micronisée à partir des fibres naturelles. En effet, contrairement aux fibres alimentaires utilisées dans l'art antérieur, la surface spécifique (atomisée, micronisée) importe peu dans la mesure où la matière subit un changement d'état conduisant les particules à perdre leur structure de base.

Selon une autre caractéristique, les fibres sont mélangées jusqu'à obtenir une masse semi-solide. En fonction de la nature et de la quantité de la substance active utilisée, mais également des caractéristiques mécaniques de l'extrudeuse, celle-ci va générer de la chaleur du fait même de son fonctionnement, c'est à dire en l'absence d'apport extérieur d'énergie. Ainsi, la température pourra varier tout au long du procédé dans une fourchette de valeurs comprise entre 30 et 130°C, étant entendu que l'homme du métier adaptera les paramètres de fonctionnement de l'extrudeuse de sorte à ne pas atteindre des températures susceptibles de dénaturer le profil analytique du principe actif. La substance active peut être incorporée avec les fibres pendant la montée en température ou une fois seulement l'état semi solide atteint. L'incorporation de la matière active peut être réalisée sous différentes formes qui dépendent de la nature physico-chimique de ladite substance active.

Lorsque la substance active se présente sous forme solide, celle-ci est incorporée soit directement soit sous forme dissoute ou dispersée au sein d'un solvant hydrophobe, étant indiqué que tout solvant hydrophile est, comme déjà dit, proscrit. Ainsi, dans tous les cas où l'actif est hydrosoluble, il est mis en milieu hydrophobe par toute technique connue de l'homme du métier avant d'être mis au contact des fibres alimentaires.

En pratique, le solvant hydrophobe est liquide à température ambiante. Il est notamment choisi dans le groupe comprenant la triacétine, les huiles végétales ou minérales, la glycérine sans que cette liste ne soit limitative.

Lorsque la substance active est liquide à l'état naturel, elle peut être incorporée telle quelle, notamment par granulation dans les fibres alimentaires à la condition qu'elle soit hydrophobe. Dans le cas contraire, la substance active liquide est rendue hydrophobe préalablement à son mélange avec les fibres alimentaires.

Dans une troisième étape, le mélange de fibres alimentaires dans lequel est inclus la substance active est extrudé. Cette extrusion est effectuée au travers d'une filière, alors que le mélange est encore à l'état semi-solide.

Au fur et à mesure de la sortie de la filière, les filaments refroidissent au contact de la température ambiante.

La taille de la filière est bien entendu choisie en fonction de la taille souhaitée des particules étant rappelé que les filaments obtenus sont ensuite divisés. Cette ultime étape de division peut être effectuée par différentes méthodes telles que broyage ou encore concassage.

L'invention et les avantages qui en découlent ressortiront mieux des exemples de réalisation suivants à l'appui des figures annexées.

La figure 1 correspond aux profils chromatographiques en phase gazeuse respectivement d'un arôme naturel d'orange (fig la) et de ce même arôme incorporé au sein d'une particule de l'invention (fig 1b).

La figure 2 correspond à la courbe obtenue à l'issue d'un essai d'indentation réalisé par la méthode dynamique sur un matériau élastoplastique : la silice.

Les figures 3, 4 et 5 correspondent aux courbes obtenues à l'issue d'un essai d'indentation réalisé par la méthode dynamique respectivement sur l'epoxy (Fig 3 a, b, c), des particules de l'invention de taille égale à 1 mm (Fig 4 a, b, c) et 2 mm. (Fig 5 a, b, c).

**Exemple 1 : restitution du profil chromatographique de l'huile essentielle naturelle dans la particule**

Dans une extrudeuse, on introduit un mélange inuline/FOS dans un rapport 60/40 (Raftiline raftilose®P95 commercialisé par ORAFTI ou Fibrulose® commercialisé par COSUCRA) sous forme pulvérulente et de l'huile essentielle d'orange dans un rapport en poids égal à 96/4. Le mélange des deux produits génère une montée en température jusqu'à environ 35°C, température à laquelle le mélange devient semi solide. On extrude ensuite ledit mélange au travers de la filière puis on calibre les filaments formés à une taille de 4 mm. Après refroidissement, on récupère les particules formées.

On compare ensuite, par chromatographie en phase gazeuze, le profil de l'huile essentielle témoin et celui de l'huile essentielle récupérée après dissolution dans l'eau, de la particule et distillation de l'eau.

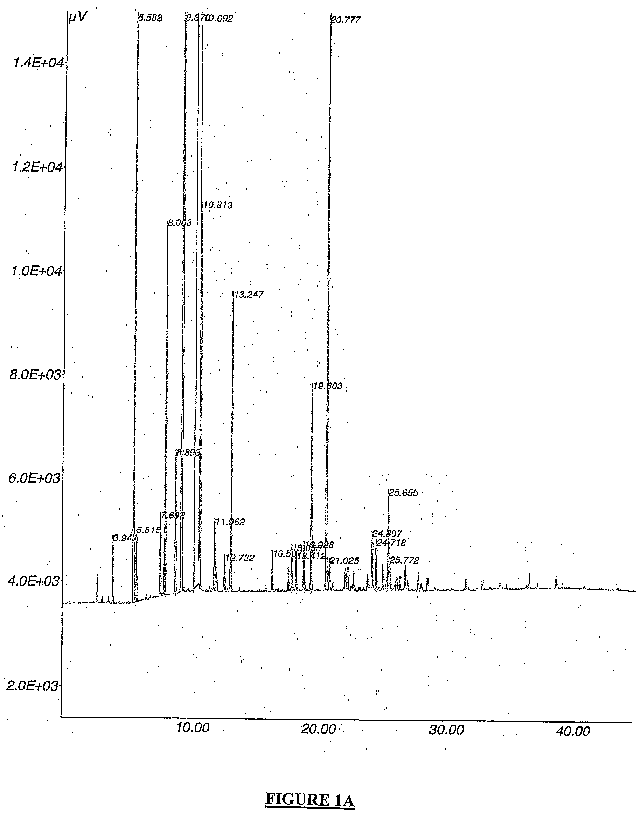

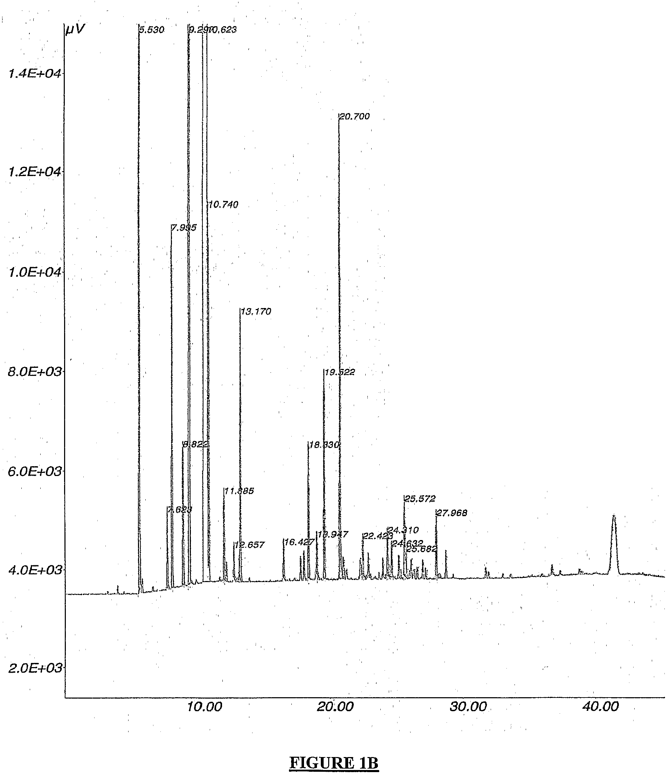

Sur les figures 1a et 1b sont représentés les profils chromatographiques en phase gazeuse du témoin (huile essentielle d'orange) (figure la) et de l'échantillon (figure 1b).

Comme le montrent ces figures, on retrouve un profil chromatographique identique entre l'échantillon et le témoin. Cela signifie donc que le profil aromatique de l'huile essentielle est complètement restitué au sein de la particule.

**Exemple 2 : mesure de la dureté des particules par nanoindentation**

Dans une extrudeuse, on introduit un mélange inuline/FOS dans un rapport 60/40 (Raftiline raftilose®P95 commercialisé par ORAFTI ou Fibrulose® commercialisé par COSUCRA) sous forme pulvérulente et de l'huile essentielle de menthe dans un rapport en poids égal à 97/3. Le mélange des deux produits génère une montée en température jusqu'à environ 35°C, température à laquelle le mélange devient semi solide. On extrude ensuite ledit mélange au travers de la filière puis on calibre les filaments. Après refroidissement, on récupère des particules de taille moyenne comprise entre 0,335 et 2,25 mm.

On mesure la dureté des particules obtenues par nano-indentation sur un nano indenteur XP® commercialisé par Nano Instruments. La méthode d'essai utilisée est une méthode dynamique. Le principe de la méthode dynamique repose sur la superposition d'un mouvement continu et d'un mouvement oscillant à fréquence fixe (32Hz) et de faible amplitude (5nm). Ainsi au cours de la charge il y a une succession de petites charges et petites décharges, ce qui signifie que le matériau est déformé élastiquement puis plastiquement puis de nouveau élastiquement. Les essais sont réalisés à taux de chargement P'/P constant ($3.10^{-2}$ $s^{-1}$).

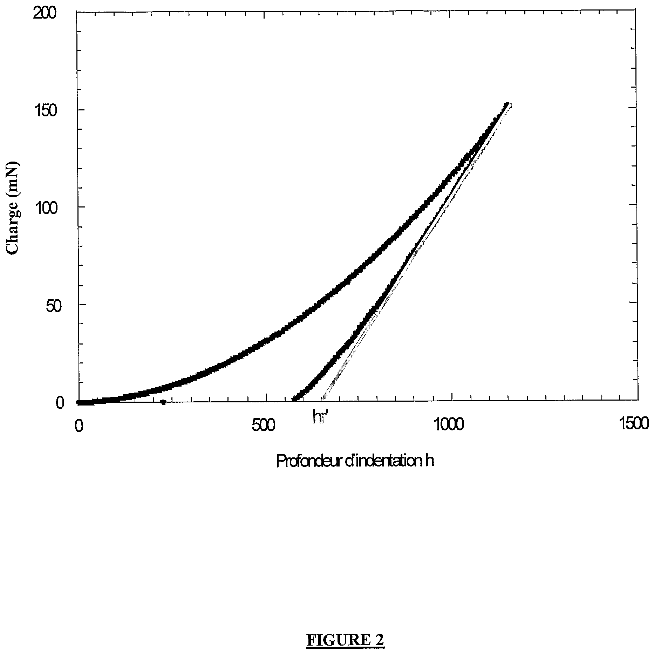

La courbe représentée sur la figure 2 correspond à un essai d'indentation réalisé par la méthode dynamique sur un matériau élastoplastique : la silice.

Sur cette courbe, le comportement élastoplastique du matériau est bien mis en évidence dans la mesure où la courbe de décharge possède presque la même pente que la courbe de charge. Cela signifie que l'enfoncement plastique sous charge est très petit et donc que le matériau s'est très peu déformé plastiquement.

A partir de cette courbe et des équations ci-après, il est possible de déduire, en tout point, les grandeurs mécaniques suivantes :

- La raideur de contact : S : correspond à la pente à la courbe de décharge de l'essai d'indentation :

$$S \; = \; \frac{P}{h \; - \; h_R},$$

- L'aire de contact :

$$A_{indentation} = 24.56 * \delta^2 = 24.56 * [1.2 * (h_{R'} + h_0)]^2 = 35.37 * (h_{R'} + h_0)^2$$

- La dureté : H

$$H = \frac{P}{A_{indentation}} = \frac{P}{35.37 * (h_{R'} + h_0)^2}$$

- Le module de conservation :

$$\frac{E'}{1 - \nu^2} = \frac{S * \sqrt{\pi}}{2 * \sqrt{A_{indentation}}} = \frac{S * \sqrt{\pi}}{2 * \sqrt{35.37 * (h_{R'} + h_0)^2}}$$

- Le module de perte :

$$\frac{E''}{1 - \nu^2} = \frac{d\omega * \sqrt{\pi}}{2 * \sqrt{A_{indentation}}} = \frac{d\omega * \sqrt{\pi}}{2 * \sqrt{35.37 * (h_{R'} + h_0)^2}}$$

- Tan$\delta$ :

$$\tan\delta = \frac{E''}{E'} = \frac{d\omega}{S}$$

avec :

P : charge
h : enfoncement total
$h_0$ : défaut de pointe
$h_{r'}$ : enfoncement plastique, hauteur du contact sans le bourrelet d'écoulement de matière
S : raideur de contact à 32Hz obtenue à l'aide du détecteur synchrone
$d\omega$ : amortissement du contact, déphasage entre le déplacement et la force mesuré à l'aide du détecteur synchrone

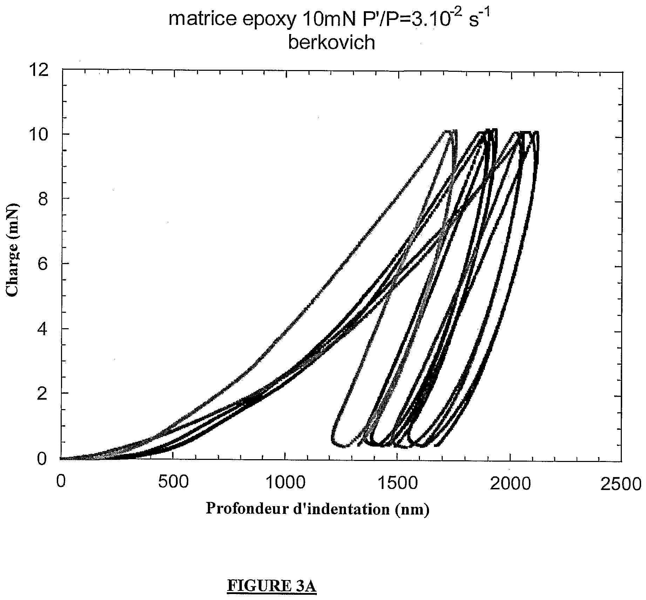

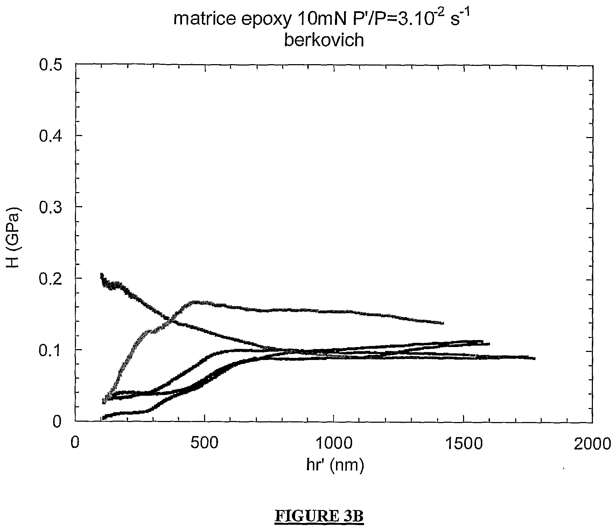

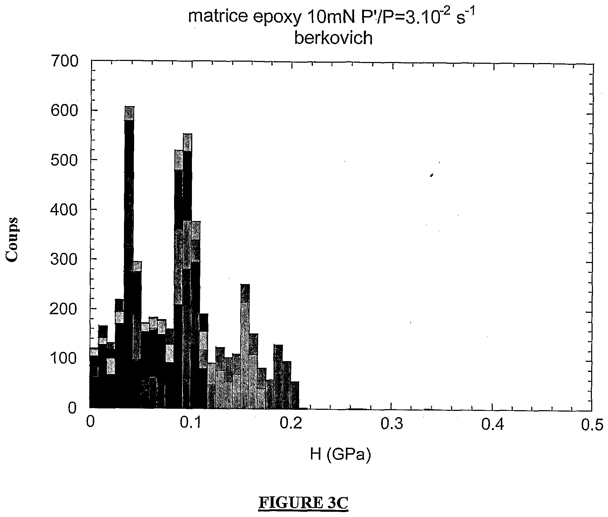

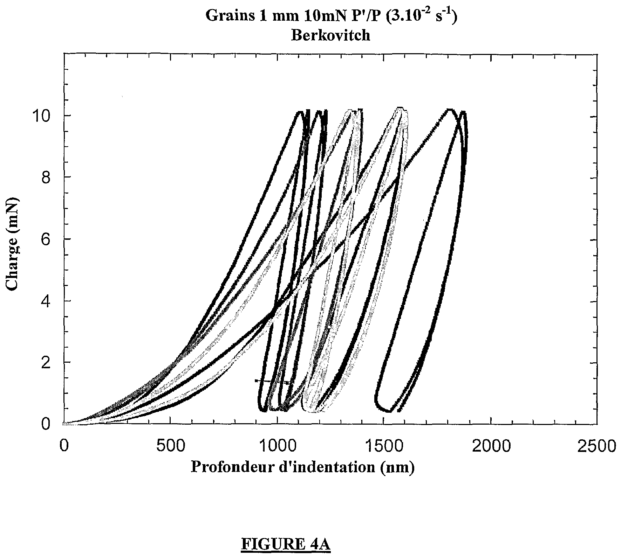

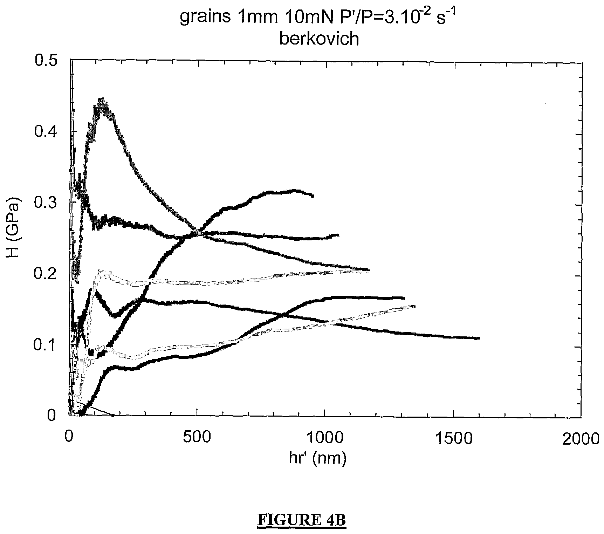

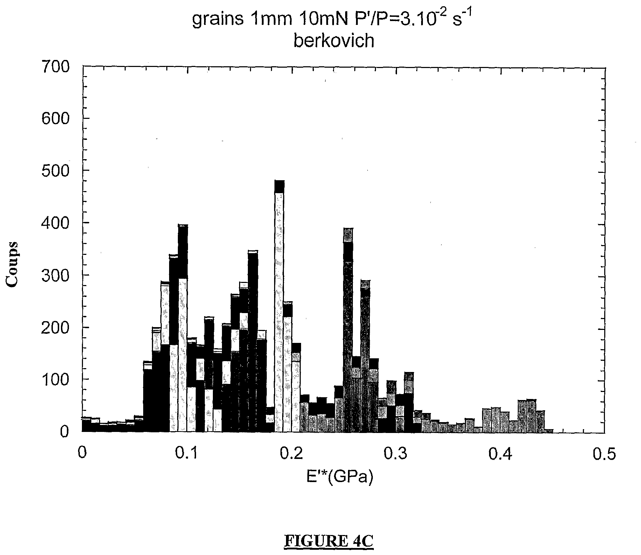

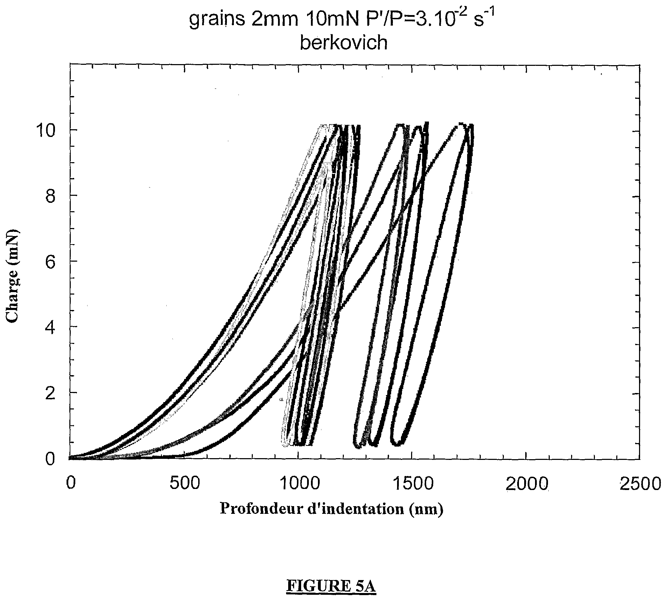

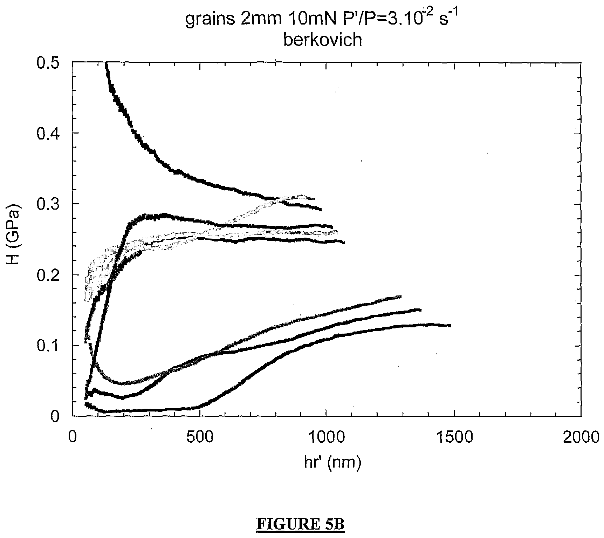

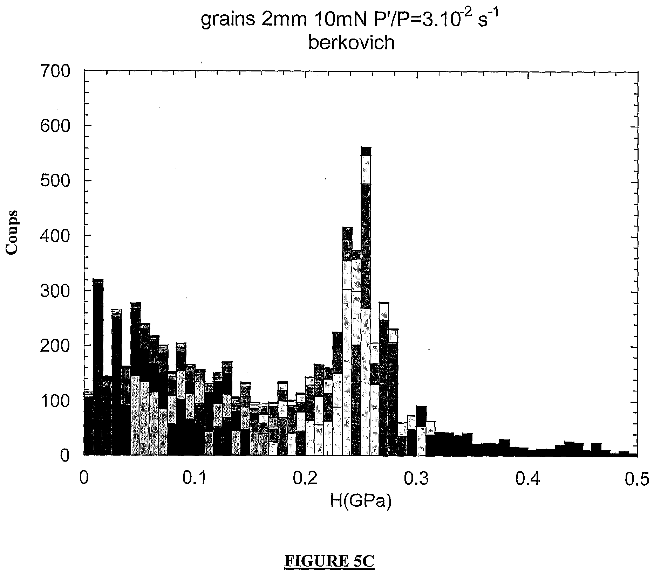

Sur les figures 3 a,b,c 4 a,b,c et 5 a,b,c sont représentés les résultats obtenus par nano indentation au moyen d'un indenteur Berkovich sur un témoin (matrice epoxy) et des particules de taille égale à 1 mm (figure 4) et 2 mm (figure 5), sous une charge égale à 10 mN.

Comme le montre ces différentes courbes, la dureté mesurée tant pour les grains de 1 mm que ceux de 2 mm est comprise entre 0,25 et 0,28 GPa.

**Revendications**

1. Particule solide entièrement soluble dans l'eau, à base d'au moins un arôme et d'un support comprenant des fibres alimentaires solubles dans l'eau, **caractérisée en ce qu'**elle présente une dureté d'au moins 0,2 GPa **en ce que** le support est exclusivement constitué de fibres alimentaires solubles résistantes aux différentes hydrolyses enzymatiques intervenant lors du processus physiologique de la digestion choisies dans le groupe comprenant l'inuline, oligo-fructoses, gomme d'acacia seules ou en mélange.

2. Particule selon la revendication 1, **caractérisée en ce qu'**elle présente une dureté comprise entre 0,3 et 0,4 GPa.

**3.** Particule selon l'une des revendications précédentes, **caractérisée en ce que** la substance active représente entre 0,1 et 10 % en poids de la particule.

**4.** Particule selon l'une des revendications précédentes, **caractérisée en ce qu'**elle a une taille comprise entre 0,1 et 3 mm, avantageusement comprise entre 0,3 et 2 mm.

**5.** Particule selon l'une des revendications précédentes, **caractérisée en ce qu'**elle contient de 2 à 5% en poids d'une huile essentielle et présente une dureté comprise entre 0,2 et 0,3 GPa.

**6.** Procédé de fabrication de particules solides entièrement solubles dans l'eau à base d'au moins un arôme et d'un support comprenant des fibres alimentaires solubles dans l'eau **caractérisée en ce qu'**elle présente une dureté d'au moins 0,2 GPa **en ce que** le support est exclusivement constitué de fibres alimentaires solubles résistantes aux différentes hydrolyses enzymatiques intervenant lors du processus physiologique de la digestion choisies dans le groupe comprenant l'inuline, oligo-fructoses, gomme d'acacia seules ou en mélange, selon lequel, en l'absence de solvant hydrophile :

- on mélange les fibres alimentaires et la substance active jusqu'à obtenir une masse semi-solide,
- on extrude alors le mélange obtenu au travers d'une filière,

enfin, on refroidit puis on calibre à la taille souhaitée les filaments formés pour obtenir des particules.

**7.** Procédé selon la revendication 6, **caractérisé en ce que** les fibres alimentaires se présentent sous forme pulvérulente.

**8.** Procédé selon l'une des revendications 6 à 7 **caractérisé en ce que** lorsque la substance active se présente sous forme solide, elle est incorporée telle quelle dans la masse ou sous forme dissoute ou dispersée au sein d'un solvant hydrophobe.

**9.** Procédé selon l'une des revendications 6 à 8, **caractérisé en ce que** lorsque la substance active se présente sous forme d'un liquide hydrophile, elle est incorporée dans la masse après avoir été rendue hydrophobe.

**10.** Procédé selon la revendication 8 **caractérisé en ce que** le solvant hydrophobe est choisi dans le groupe comprenant la triacétine, les huiles végétales ou minérales, la glycérine.

**Patentansprüche**

**1.** Komplett wasserlösliche feste Partikel, auf Basis von mindestens einem Aromastoff und einem Träger, der wasserlösliche Ballaststoffe umfasst, **dadurch gekennzeichnet, dass** sie eine Härte von mindestens 0,2 GPa aufweist, dass der Träger ausschließlich aus löslichen Ballaststoffen besteht, die gegen die verschiedenen enzymatischen Hydrolysen resistent sind, die während des physiologischen Verdauungsprozesses auftreten, die aus der Gruppe ausgewählt wird, die aus Inulin, Oligo-Fruktosen, Gummiarabikum, einzeln oder in Mischung besteht.

**2.** Partikel nach Anspruch 1, **dadurch gekennzeichnet, dass** sie eine Härte zwischen 0,3 und 0,4 GPa aufweisen.

**3.** Partikel nach einem der obigen Ansprüche, **dadurch gekennzeichnet, dass** der Wirkstoff zwischen 0,1 und 10 Gew.-% des Partikels darstellt.

**4.** Partikel nach einem der obigen Ansprüche, **dadurch gekennzeichnet, dass** sie eine Größe zwischen 0,1 und 3 mm, vorteilhafterweise zwischen 0,3 und 2 mm aufweist.

**5.** Partikel nach einem der vorstehenden Ansprüche, **dadurch gekennzeichnet, dass** sie 2 bis 5 Gew.-% eines ätherischen Öls enthält und eine Härte zwischen 0,2 und 0,3 GPa aufweist.

**6.** Verfahren zur Herstellung von komplette wasserlöslichen festen Partikeln auf Basis von mindestens einem Aromastoff und einem Träger, der wasserlösliche Ballaststoffe umfasst, **dadurch gekennzeichnet, dass** sie eine Härte von mindestens 0,2 GPa aufweisen, dass der Träger ausschließlich aus löslichen Ballaststoffen besteht, die gegen die verschiedenen enzymatischen Hydrolysen beständig sind, die während des physiologischen Verdauungsprozesses auftreten, die aus der Gruppe ausgewählt wird, die aus Inulin, Oligo-Fruktosen, Gummiarabikum, allein oder in Mischung besteht, gemäß dem, in Abwesenheit eines hydrophilen Lösungsmittels:

- die Ballaststoffe und der Wirkstoff vermischt werden, bis eine halbfeste Masse entsteht,
- die erhaltene Mischung dann durch eine Extruderdüse extrudiert,
- und schließlich abgekühlt wird, wobei die erzeugten Fasern auf die gewünschte Größe dimensioniert werden, um Partikel zu bilden.

7. Verfahren nach Anspruch 6, **dadurch gekennzeichnet, dass** die Ballaststoffe in Pulverform vorliegen.

8. Verfahren nach einem der Ansprüche 6 bis 7, **dadurch gekennzeichnet, dass** der Wirkstoff, wenn er in fester Form vorliegt, als solcher in die Masse eingebracht wird, oder in gelöster oder dispergierter Form in einem hydrophoben Lösungsmittel.

9. Verfahren nach einem der Ansprüche 6 bis 8, **dadurch gekennzeichnet, dass** der Wirkstoff, wenn er in Form einer hydrophilen Flüssigkeit vorliegt, in die Masse eingebracht wird, nachdem er hydrophobiert wurde.

10. Verfahren nach Anspruch 8, **dadurch gekennzeichnet, dass** das hydrophobe Lösungsmittel aus der Gruppe ausgewählt ist, die aus Triacetin, pflanzlichen oder mineralischen Ölen, Glyzerin besteht.

**Claims**

1. Completely-water-soluble solid particle, based on at least one aroma and a support comprising water-soluble dietary fibres, **characterized in that** it has a hardness of at least 0.2 GPa, the support consisting exclusively of soluble dietary fibres resistant to different enzymatic hydrolysis occurring during the physiological process of digestion, selected from the group comprising inulin, oligofructoses, gum arabic, alone or in mixtures.

2. Particle according to Claim 1, **characterized in that** it has a hardness of between 0.3 and 0.4 GPa.

3. Particle according to one of the preceding claims, **characterized in that** the active substance accounts for between 0.1 and 10% by weight of the particle.

4. Particle according to one of the preceding claims, **characterized in that** it has a size of between 0.1 and 3 mm, advantageously of between 0.3 and 2 mm.

5. Particle according to one of the preceding claims, **characterized in that** it contains 2 to 5% by weight of an essential oil and has a hardness of between 0.2 and 0.3 GPa.

6. Method for producing completely-water-soluble solid particles based on at least one aroma and a support comprising the water-soluble dietary fibres, **characterized in that** they have a hardness of at least 0.2 GPa, the support consisting exclusively of soluble dietary fibres resistant to different enzymatic hydrolysis occurring during the physiological process of digestion, selected from the group comprising inulin, oligofructoses, gum arabic, alone or in mixtures, according to which, in the absence of a hydrophilic solvent:

- the dietary fibres and the active substance are mixed to obtain a semi-solid mass,
- the mixture obtained is extruded through a die,
- the filaments formed are cooled and calibrated to the desired size to obtain particles.

7. Method according to Claim 6, **characterized in that** the dietary fibres are in powder form.

8. Method according to one of Claims 6 to 7, **characterized in that** when the active substance is in solid form, it is incorporated as such in the mass or in its dissolved form or dispersed form in a hydrophobic solvent.

9. Method according to one of Claims 6 to 8, **characterized in that** when the active substance is in the form of a hydrophilic liquid, it is incorporated in the mass after having been made hydrophobic.

10. Method according to Claim 8, **characterized in that** the hydrophobic solvent is selected from the group comprising triacetin, vegetable or mineral oils and glycerin.

**FIGURE 1A**

**FIGURE 1B**

11

**FIGURE 2**

matrice epoxy 10mN P'/P=3.10$^{-2}$ s$^{-1}$
berkovich

**FIGURE 3A**

matrice epoxy 10mN P'/P=3.10$^{-2}$ s$^{-1}$
berkovich

**FIGURE 3B**

matrice epoxy 10mN P'/P=3.10$^{-2}$ s$^{-1}$
berkovich

**FIGURE 3C**

Grains 1 mm 10mN P'/P $(3.10^{-2}\ s^{-1})$
Berkovitch

**FIGURE 4A**

grains 1mm 10mN P'/P=3.10$^{-2}$ s$^{-1}$
berkovich

**FIGURE 4B**

grains 1mm 10mN P'/P=3.10$^{-2}$ s$^{-1}$
berkovich

FIGURE 4C

grains 2mm 10mN P'/P=3.10$^{-2}$ s$^{-1}$
berkovich

FIGURE 5A

grains 2mm 10mN P'/P=3.10$^{-2}$ s$^{-1}$
berkovich

FIGURE 5B

grains 2mm 10mN P'/P=3.10$^{-2}$ s$^{-1}$
berkovich

FIGURE 5C

**EP 1 773 135 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9906028 A
- WO 0117372 A
- FR 2294653 A
- WO 03092912 A
- EP 112660 A
- WO 0025606 A
- WO 0265858 A
- WO 0143568 A